# EUROPÄISCHE PATENTSCHRIFT

(11) **EP 4 342 271 B1**
(45) Veröffentlichungstag und Bekanntmachung des Hinweises auf die Patenterteilung: **13.11.2024**
(21) Anmeldenummer: 23197315.7
(22) Anmeldetag: 14.09.2023
(51) Int. Cl.: A01B 39/00

(54) **MECHANISCHES SIKKATIONS-SYSTEM**
MECHANICAL SILYLATION SYSTEM
SYSTÈME D'INJECTION MÉCANIQUE

(30) Priorität: 15.09.2022 DE 202022105204 U
(43) Veröffentlichungstag der Anmeldung: 27.03.2024
(73) Patentinhaber: Ropa Fahrzeug- und Maschinenbau GmbH, 84097 Herrngiersdorf (DE)
(72) Erfinder: LANDZETTEL, Christian, 86947 Weil-Pestenacker (DE); PAINTNER, Hermann, 84097 Herrngiersdorf (DE)
(74) Vertreter: Kurig, Thomas

(56) Entgegenhaltungen:
- CN-A- 110 959 318
- CN-A- 114 568 049
- DE-A1- 2 749 474

## Beschreibung

### Technisches Gebiet

Die vorliegende Erfindung betrifft ausschließlich das technische Gebiet der Landwirtschaft, insbesondere ein mechanisches Krautregulierungs- bzw. Sikkations-System, zum effektiven abtöten und austrocknen von noch lebendem Kraut, insbesondere von Acker- oder Feldfrüchten, bevorzugt Kartoffeln. Ferner ist die vorliegende Erfindung auf ein landwirtschaftliches Nutzfahrzeug mit dem mechanischen Sikkations-System und ein mechanisches Sikkations-Verfahren in Form einer Verwendung des mechanischen Sikkations-Systems gerichtet. Als Stand der Technik in diesem Gebiet sind u.a. die folgenden Dokumente relevant: CN 110 959 318 A, CN 114 568 049 A, DE 27 49 474 A1.

### Beschreibung des Standes der Technik

Sikkation (von lat. siccare: trocknen), im Fachjargon auch Krautregulierung oder "Abreifen" (insbesondere bei Kartoffeln), bezeichnet einen Vorgang in der Landwirtschaft, bei dem Kulturpflanzenbestände zum Zwecke der Abreifebeschleunigung, üblicherweise unter Zuhilfenahme von chemischen Herbiziden ("Sikkanten"), wie Glyphosat, abgetötet werden. Dieser Vorgang dient der Ertragsoptimierung, etwa um Kartoffelknollen schneller und gleichmäßiger in einen erntefähigen Zustand zu bringen oder um bei Winterraps erhöhter Verunkrautung und Zwiewuchs vorzubeugen und so einen zusätzlichen Gewinn bei der Ernte zu erwirtschaften.

Im ökologischen Landbau existiert das Problem einer effektiven und umweltschonenden Sikkation. Chemische Hilfsstoffe sind in diesem Gebiet üblicherweise nicht erlaubt. Die folgenden Beschreibung des Standes der Technik bezieht sich auf Prozesse im Zusammenhang mit Kartoffelpflanzen als besonders bevorzugtes Einsatzgebiet der vorliegenden Erfindung. Die Erfindung kann jedoch ausdrücklich auch für Sikkation anderer Feld- bzw. Ackerfruchtkräuter in der Landwirtschaft Anwendung finden.

Sinn der Sikkation bei Kartoffelpflanzen ist die Optimierung und Synchronisation des Ausreifeprozesses der Knolle sowie dem Vermeiden von ertragsminderndem Nachtreiben der Pflanze. Mit zunehmendem Wachstum eines Kartoffelbestandes wachsen die Knollen insbesondere ab der Blüte des Bestandes sehr stark. Je weiter sich die Pflanze ab diesem Zeitpunkt der physiologischen Reife nähert, desto mehr zehren die wachsenden Knollen bereits von Nährstoffen aus dem Kraut und das Kraut beginnt heller zu werden. Mit der späteren Abreife der Knollen bedingt dieser pflanzenhormonell gesteuerte Prozess dann eine Verlangsamung des Knollenwachstums zugunsten zunehmender Ausreife der Knollen: Hier werden insbesondere Stärke, verschiedene Eiweiße und andere wertgebende Inhaltsstoffe in den Knollen eingelagert. Das Kraut wird hier zunehmend ausgelaugt, wird meist gelb und aufgrund des physiologischen Abbaus wird es auch von Parasiten befallen, wird dürr und trocknet ein, und stirbt schließlich ab.

Dieser vereinfacht dargestellte Prozess der Kartoffel-Abreife sei hier als der Normalfall beschrieben. Davon abweichend kann dieser pflanzenphysiologisch normale Ablauf insbesondere durch bestimmte Witterungserscheinungen, etwa in Verbindung mit sehr späten bzw. zu späten Nährstoffangeboten aus dem Boden, gestört werden. Ist es sehr lange trocken und heiß, stellen die Stauden das normale Wachstum ein. Späterer Niederschlag aktiviert nicht nur die Pflanze, sondern auch die mikrobiellen Vorgänge im Boden. Infolgedessen werden der Pflanze dann Nährstoffe angeboten, die sie vorher gebraucht hätte, aufgrund der Trockenheit jedoch nicht erlangen konnte. Solche Vorgänge können den Hormonhaushalt der Pflanze stark stören, sodass diese in einer Art zweitem Frühling erneut wächst anstatt sich weiter Richtung Reife zu bewegen. Derartige oder ähnliche Abweichungen vom Normalfall können je nach Sorte auch die normale Abreife der Knollen stark stören, sodass es hier zu verschiedenen qualitativen und quantitativen Beeinträchtigungen kommen kann. Diese können durch gezielte, reifefördernde Eingriffe in die Krautentwicklung vermieden werden. Im Kartoffelbau bezeichnet man mit der sogenannten "Krautregulierung" die aktive Beschleunigung der Abreife durch

Beschleunigung der Krautabreife. Diese hat folgende Ziele:
- in allen Fällen: die inhaltsstoffliche Ausreife der Knollen ist im Regelfall einige Zeit vor dem vollständigen Krautabsterben gegeben. Erst ab hier festigt sich die Schale und erst mit erreichter "Schalenfestigkeit" (nicht bei allen Kartoffelsorten oder -Erntevorgängen erwünscht) können die Knollen maschinell und einfacher, ohne große Beschädigungen geerntet werden. Eine gewisse Beschleunigung der Erntereife ist in den meisten Fällen möglich und sinnvoll, da im Herbst verschiedenste Schädlinge die Qualität ausgereifter Knollen im Boden beeinträchtigen können;
- vor allem im Normalfall: Vergleichmäßigung der Abreife. Insbesondere auf größeren Flächen reifen die Stauden in den seltensten Fällen komplett gleichmäßig ab. Durch den Eingriff verhindert man eine Verzögerung der Ernte durch einzelne, sehr träge abreifende Bereiche;
- in einigen Fällen: Stabilisierung und Fixierung bestimmter Knollengrößen oder Stärkegehalte;
- in Fällen physiologischer Störungen kann durch Krautregulierung einem Qualitätsrisiko für die Knollen entgegengewirkt werden, wenn das entwicklungsphysiologisch störende Pflanzenwachstum gezielt beendet wird.

Die Sikkation oder Krautregulierung wird zumeist mit chemischen Hilfsmitteln vollzogen. Im ökologischen Kartoffelbau erfolgt sie in erster Linie durch mechanisches Krautschlagen ("dammkonturparalleles Abmulchen", bspw. durch rotierende Messer), welches in einigen Fällen ergänzt wird durch thermische Verfahren (Abflammen). Insbesondere die starken Einschränkungen chemischer Krautregulierungsmittel auf der einen Seite sowie andererseits auch ein starkes Wachstum des ökologischen Anbaues sind Gründe für ein in der letzten Zeit enorm gestiegenes Interesse an alternativen, jedoch bisher nicht in der Breite etablierten sowie auch an neuen Verfahren der Krautregulierung.

Die Krautregulierung gestaltet sich umso aufwändiger, je grüner und entsprechend wachstumsbereiter das Kartoffelkraut zum Zeitpunkt des Eingriffes noch ist. Sichtlich vergilbtes Kraut wird bei trocken-sonniger Witterung mit Kleinmengen vergleichsweise schwacher chemischer Sikkative ebenso verlässlich vernichtet wie mit einem einmaligen Krautschlagen. Man verstärkt und beschleunigt durch den Eingriff also den Prozess der Krautabreife.

Je vitaler das Kraut jedoch noch ist, desto stärker wird der Versuch und desto stärker ist die Kraft der noch wachstumswilligen Kartoffelstaude sich von einer Beeinträchtigung wieder zu erholen und im Extremfall erneut auszutreiben. Ein besonders unerwünschtes Szenario besteht in einer Staude, die nach einer Krautminderung erneut austreibt und hierfür Energie aus den Knollen zehrt.

Für den Landwirt besteht das Ziel darin einen Kartoffelbestand pflanzenbaulich schon von der Bodenvorbereitung und Düngung an so zu führen, dass oben beschriebener Normallfall möglichst wahrscheinlich eintritt. Muss jedoch aus oben grob skizzierten Gründen in noch grüneren Beständen eingegriffen werden, um qualitative Risiken zu vermeiden, sind umso mehr und meist auch intensivere Eingriffe erforderlich, um auch hier durch mehrere Schritte das kontraproduktive Wachstum zu bremsen, was durch einen einmaligen, sehr aggressiven Schritt nicht zu erreichen wäre.

Alle Verfahren zur Sikkation eint das Ziel mit möglichst wenigen Eingriffen, das heißt möglichst wenigen Überfahrten, möglichst sichere Effekte zu erzielen und so sicher wie möglich den "worst case" einer noch längere Zeit nicht abreifenden oder gar "umsteuernden" und erneut austreibenden Staude zu verhindern.

Wie bereits oben angeführt, ist das im nicht-chemischen Bereich mit überwältigender Mehrheit genutzte Verfahren das Krautschlagen. Nimmt man den Kartoffelackerbau als Beispiel, wird hier angepasst an eine Dammkontur, in der die Knollen wachsen, das Kartoffelkraut in der Regel auf eine Länge von 5-15 cm oberhalb der Dammoberfläche eingekürzt. Darüber befindliches Blattwerk wird wie mit einem Mulchgerät abgeschlagen, zerkleinert und durch Leitbleche in die Dammsohlen abgelegt. Ohne weiteren Eingriff muss der Stängelstumpf von selbst abtrocknen und absterben. Dieser Prozess wird durch das Krautschlagen vielfach erheblich beschleunigt, da photosynthetisch aktives und somit eventuell noch wachstumsförderndes Kraut beseitigt wird. Hinzu kommt ein weiterer wesentlicher Effekt: Es entsteht eine Wunde, zu deren Verschluss die ohnehin schon geschwächte Staude Energie aufwendet. Anders betrachtet, verliert die Pflanze über die Wunde Wasser und es kommt zum beschleunigten Austrocken und Absterben des Stängelstumpfes. Dieser weitere Energieverlust wirkt insbesondere bei trocken-warmer Witterung deutlich reifefördernd.

Ein anderes, schon vor vielen Jahren erprobtes und nun neu professionalisiertes Verfahren der Krautregulierung beruht auf der Wirkung elektrischer Spannung bzw. elektrischen Stromes. Durch einen mit dem Schlepper mitgeführten, leistungsfähigen Generator wird Strom mit hoher Spannung erzeugt und über eine spezielle Vorrichtung auf das Kartoffelkraut geleitet. Die Abreifebeschleunigung wird hier über intensive Stromeinwirkung hervorgerufene Zellschädigung herbeigeführt. Hier werden stehende Bestände direkt bearbeitet. Derzeit bieten manche Firmen eine Verfahrensoptimierung durch eine gleichzeitig in der Front des Schleppers umgesetzte Spritzung von die Leitfähigkeit erhöhenden Stoffen an.

### Kurze Beschreibung der Ausführungsformen

Die vorliegende Erfindung setzt an den oben beschriebenen Problemen an. In der vorliegenden Erfindung geht es hauptsächlich darum das Abreifen einer Ackerfruchtstaude (hierin auch als "Kraut" bezeichnet), bevorzugt einer Kartoffelstaude, zu beschleunigen, indem oberirdisches Pflanzenmaterial, insbesondere ein nach einem Krautschlagen verbleibenden, oben abgeschlagenen Stängelstumpf gequetscht werden. Der Schwerpunkt der Erfindung liegt dabei auf der Quetschung der ersten 25 cm der Stängelstümpfe, die nach dem Krautschlagen auf der Dammkrone verbleiben, auf einer Höhe von bevorzugt 0-15 cm oberhalb der Erdoberfläche bzw. der Oberseite des Dammes. Die Erfindung ist jedoch nicht an vorgelagertes Krautschlagen gebunden und auch ganze Stauden ohne vorheriges Krautschlagen können auf Grundlage der vorliegenden Erfindung gequetscht werden.

Gemäß der vorliegenden Erfindung wird ein Sikkations-System zum mechanischen Abtöten von Pflanzen, insbesondere Kartoffelpflanzen, auf Ackerflächen im landwirtschaftlichen Landbau bereitgestellt. Das Sikkations-System ist konfiguriert, um durch ein landwirtschaftliches Nutzfahrzeug über eine Ackerfläche bewegt zu werden. Das Sikkations-System ist ferner so konfiguriert, dass sich die Pflanzen bei der Anwendung des Systems in der Erde der Ackerfläche befinden und dass die Pflanzen auch nach Anwendung des Sikkations-Systems in der Erde verwurzelt bleiben. Das Sikkations-System enthält mindestens eine Quetscheinheit und einen Verbindungsabschnitt. Der Verbindungsabschnitt ist konfiguriert, um das Sikkations-System mechanisch mit dem landwirtschaftlichen Nutzfahrzeug zu verbinden. Die mindestens eine Quetscheinheit enthält zwei rotierbare Quetschkörper und eine gedachte Gerade durch Rotationsachsen der zwei rotierbaren Quetschkörper steht im Wesentlichen senkrecht zur bevorzugten Fahrtrichtung des landwirtschaftlichen Nutzfahrzeugs. Die zwei rotierbaren Quetschkörper der mindestens einen Quetscheinheit sind so angeordnet, dass zwischen den Quetschkörpern ein Quetschraum definiert ist, wobei die Rotation der zwei rotierbaren Quetschkörper der mindestens einen Quetscheinheit derart gekoppelt ist, dass ein Kraut der lebenden Pflanzen durch die Rotation der zwei rotierbaren Quetschkörper in den Quetschraum eingezogen und gequetscht wird.

Durch das Sikkations-System gemäß der Erfindung werden lebende Pflanzenteile effektiv gequetscht. Das Quetschen verursacht im Gegensatz zu einem sauberen, glatten Schnitt eine Vielzahl großer Wunde an der Pflanzen. Diese Wunden kann die Pflanze nicht mehr selbständig verschließen und zudem wird die Wasser- und Nährstoffversorgung der noch lebenden Pflanzenteile durch das Öffnen der Transportkanäle im Pflanzengewebe unmöglich. Die Pflanze kann sich nicht mehr selbst heilen und stirbt schnell und effektiv ab. Da durch die Ausbildung der Quetschkörper die Pflanze zudem nach der Anwendung des Sikkations-Systems in der Erde verbleibt, wird der Reifeprozess von Pflanzenteilen unterhalb der Erdoberfläche, also insbesondere Kartoffelknollen oder ähnliche Feld- bzw. Hackfrüchte, nicht negativ beeinträchtigt. Eine Erntephase kann daher durch das Sikkations-System effektiv eingeleitet werden, wobei der Einsatz chemischer Hilfsstoffe reduziert oder gänzlich vermieden werden kann. Das Sikkations-System ist daher auch für die Anwendung im ökologischen Landbau geeignet.

Wie oben beschrieben, steht eine gedachte Gerade durch die Rotationsachsen im Wesentlichen senkrecht zur bevorzugten Fahrtrichtung (also in der Regel vorwärts) des landwirtschaftlichen Nutzfahrzeugs. Somit stehen die Rotationsachsen der Quetschkörper im Wesentlichen senkrecht zu einer horizontalen Geraden, die üblicherweise parallel zur Ackerfläche ist. Die Ausrichtung der der Rotationsachsen der Quetschkörper wird hauptsächlich durch die Bauform des Sikkations-Systems und die Art und Ausbildung der Verbindung mit dem landwirtschaftlichen Nutzfahrzeug durch den Verbindungsabschnitt festgelegt. Dem Fachmann sind viele Möglichkeiten einer solchen Festlegung bekannt, die hier nicht weiter eingeschränkt werden sollen. Eine praktische Ausführung einer solchen Festlegung ist mit Bezug auf die Zeichnungen weiter unten beschrieben. Die Quetschkörper werden bevorzugt über einen Hydraulikmotor oder einen Elektromotor angetrieben, der beispielsweise von dem Sikkations-System selbst oder von dem landwirtschaftlichen Nutzfahrzeug mit Energie versorgt wird.

In einer Ausführungsform des Sikkations-Systems sind die Rotationsachsen der Quetschkörper während des Betriebs im Bereich von ± 15°, bevorzugt ± 10° senkrecht zur Ackerfläche. Zusätzlich oder alternativ dazu können die Rotationsachsen im Bereich von ± 30°, bevorzugt ± 15°, besonders bevorzugt ± 5° parallel zueinander sein. Sind die Quetschkörper walzenförmig ausgeführt, sind Ausführungsformen, in denen die Rotationsachsen der Quetschkörper während des Betriebs senkrecht zur Ackerfläche und parallel zueinander sind, besonders bevorzugt, jedoch nicht obligatorisch. Dadurch wird ein unerwünschtes "Abquetschen" der Pflanzen verhindert. Eine weitere Möglichkeit ein unerwünschtes "Abquetschen" der Pflanzen zu verhindern, ist eine, weiter unten beschriebene gefederte Lagerung der Quetschkörper.

In einer Ausführungsform des Sikkations-Systems bewegen sich die einander zugewandten Oberflächen der rotierbaren Quetschkörper im Bereich des Quetschraums mit der gleichen Geschwindigkeit und in die gleiche Richtung, so dass das Kraut gleichmäßig eingezogen und gequetscht wird. Alternativ kann das Quetschen auch durch ein leichtes Verdrehen der Pflanzenteile durch unterschiedliche Laufgeschwindigkeiten der Quetschkörper ergänzt werden, beispielsweise indem eine Quetschkörperfläche mit einer Verzahnung oder Ähnlichem, und eine Quetschkörperfläche ohne Unebenheiten vorgesehen wird. Dieses Verdrehen birgt jedoch ein gewisses Risiko, dass Pflanzen aus der Erde gerissen werden.

In einer Ausführungsform des Sikkations-Systems umfasst dieses ferner eine Steuerung, die die Rotation der rotierbaren Quetschkörper so steuert, dass die Geschwindigkeit der einander zugewandten Flächen der Quetschkörper im Bereich des Quetschraums mindestens gleich oder schneller als die Fahrtgeschwindigkeit des landwirtschaftlichen Nutzfahrzeugs ist. Die Steuerung kann anhand der Fahrtgeschwindigkeit des landwirtschaftlichen Nutzfahrzeugs, die auf bekannte Weise, beispielsweise über Sensoren oder anhand von Fahrtinformationen des landwirtschaftlichen Nutzfahrzeugs erhalten werden, die Rotationsgeschwindigkeit der rotierbaren Quetschkörper steuern.

Durch die oben beschriebene Angleichung von Rotation- und Fahrtgeschwindigkeit wird effektiv verhindert, dass Pflanzen im Betrieb aus der Erde gerissen werden, insbesondere durch zu langsam rotierende Quetschkörper, was die gequetschten Pflanzenteile zu lange im Quetschraum zwischen den Quetschkörpern festhält und diese in Fahrtrichtung aus der Erde zeihen kann.

In einer Ausführungsform des Sikkations-Systems weisen die rotierbaren Quetschkörper im Wesentlichen eine Walzenform oder eine sich nach unten leicht verjüngende Kegelstumpfform (Kegelspitzenwinkel von 0,1-15°) auf, wobei die Walzen bevorzugt im Wesentlichen den gleichen Durchmesser aufweisen. Durch diese Form der rotierbaren Quetschkörper wird ein gleichmäßiges bzw. nach oben hin mit zunehmenden Druck durchgeführtes Quetschen der Pflanzenteile gewährleistet. Zudem wird ein unerwünschtes Abquetschen der Pflanzenteile, was dem Effekt eines sauberen Abschneidens der Pflanze gleichkommt, vermieden.

In einer Ausführungsform des Sikkations-Systems sind die beiden Quetschkörper der Quetscheinheit zueinander federnd gelagert, mit einer Vorspannungskraft ("Quetschkraft"), die einer senkrecht in Richtung der Rotationsachse des jeweils anderen Quetschkörpers wirkenden Feder mit Federkonstante zwischen 1.000 N/m und 100.000 N/m, bevorzugt zwischen 5.000 N/m und 10.000 N/m entspricht. Alternativ können die beiden Quetschkörper der Quetscheinheit auch so zueinander gelagert sein, dass diese bis zum Aufbringen einer gewissen Kraft ("Trennkraft") einen konstanten Abstand haben bzw. einander berühren. Die Trennkraft kann zwischen 1-100 Kg betragen und durch eine Kombination aus Federn und Dämpfern umgesetzt werden. Die Quetschköper können, wie bereits oben beschrieben, so montiert sein, dass sie sich in einem Bereich zwischen ihren jeweiligen Rotationsachsen berühren. Bevorzugt sind die Quetschkörper jedoch mit einem Mindestabstand (ohne zusätzliche Krafteinwirkung, also im Ruhezustand) von 1-3mm montiert. Die beschriebene Vorspannkraft kann durch montieren einer oder mehrerer Schraubenfeder(n) zwischen den Rotationsachsen der Quetschköper bzw. an Verlängerungen dieser Achsen oder Elementen, die die Achsen stützen, erreicht werden. Die Messung der Vorspannkraft bzw. der entsprechenden Federkonstante kann auf bekannte Weise erfolgen (das heißt im Wesentlichen Messung der kraftabhängigen Auslenkung), beispielsweise an horizontal entsprechenden Punkten an den Rotationsachsen die der vertikalen Mitte der Quetschkörper entsprechen. Die maximale Auslenkung, die die Lagerung der Rotationsachsen der Quetschkörper erlaubt, beträgt bevorzugt 5 cm. Ferner kann die zwischen den Quetschkörpern wirkende Quetschkraft in einer Ausführungsform auch einstellbar sein, etwa um an verschiedene Pflanzensorten, Wuchshöhen (bzw. Alter, Stichwort Verholzung) und Reife- oder Trocknungszustände der Pflanzen angeglichen zu werden. Bereits angetrocknete Pflanzenstängel sind beispielsweise in der Regel härter und es wird eine höhere Quetschkraft benötigt.

Die Erfindung muss jedoch nicht auf eine federnde Lagerung der Rotationsachsen beschränkt sein. Ähnliche Effekte lassen sich beispielsweise mit einer nachgiebige (z.B. Gummi-) Beschichtung auf der Oberfläche der Rotationskörper erzielen. Auch kann das System aus Rotationskörpern komplett starr gelagert und die Oberfläche der Rotationskörper unnachgiebig sein (z.B. aus einer Stahllegierung), was eine sehr gleichmäßige Quetschung aller Pflanzenteile bewirkt.

In einer Ausführungsform des Sikkations-Systems umfasst dieses weiterhin zwei Führungsarme, die sich von einer Position des Sikkations-Systems an einem unteren Ende der Quetscheinheit erstrecken, um das Kraut einem Einzugsbereich des Quetschraums der Quetscheinheit zuzuführen. Durch die Führungsarme können auch zuvor abgeknickte oder schräge gewachsene Pflanzenteile noch in den Quetschraum geführt werden. Eine weitere Aufgabe der Führungsarme ist die Positionskontrolle relativ zu Aufschüttungen ("Dämmen"), aus denen die zu quetschenden Pflanzen wachsen. Zudem können die Führungsarme federnd gelagert sein und so über die Oberfläche der Dämme streichen, dass Risse in den Dämmen geschlossen und die Position er Quetscheinheit in Bezug auf den Damm (d.h. wünschenswert mittig über dem Damm, wo die Pflanzen aus der Erde treten) in gewissen Rahmen angepasst wird.

In einer Ausführungsform des Sikkations-Systems sind die Führungsarme bezogen auf eine Ebene senkrecht zu den Rotationsachsen der Quetschkörper von dem unteren Ende der Quetscheinheit um einen Winkel von 10° bis 40°, bevorzugt 15° bis 30° von der Quetscheinheit weg nach unten geneigt. Die zwei Führungsarme schließen in der Ebene senkrecht zu den Rotationsachsen der Quetschkörper einen Winkel von 30° bis 60°, bevorzugt 40° bis 50° ein. Durch diese Ausformungen der Führungsarme wird ein effektives Aufgreifen von Pflanzenteilen, die schräg ausgewachsen oder umgeknickt sind, gewährleistet. Zudem passt sich die Ausformung der Führungsarme gut üblichen Aufschüttungen bzw. Dämmen an.

In einer Ausführungsform des Sikkations-Systems bilden die Führungsarme und zwei Linien, die jeweils obere und unteren Enden der Führungsarme miteinander verbinden, senkrecht projiziert auf eine Ebene, in der die beiden Rotationsachsen der Quetschkörper liegen, einer Trapezoid-Form, dessen parallele Seiten ein Verhältnis von 1:2 bis 1:3 aufweisen und dessen Schenkel zur längeren der parallelen Seiten jeweils einen Winkel zwischen 25° und 60°, bevorzugt zwischen 35° und 45° einschließen. Durch diese spezielle Trapezform im Querschnitt wird der Raum zwischen den Führungsarmen (die Trapezoid-Form) gut an die Form üblicherweise im Kartoffelackerbau gebildeter Dämme angepasst.

In einer Ausführungsform des Sikkations-Systems weisen die Führungsarme jeweils einen V-förmigen Querschnitt auf und sind die untere Schnittstellen der V-Formen der beiden Führungsarme einander zugewandt. Durch diese Ausbildung der Führungsarme kann verhindert werden, dass diese sich beim Streichen über einen Damm in den Damm graben. Stattdessen werden durch die Schrägstellung Risse im Damm zugeschüttet und ausgeglichen und so die im Damm befindlichen Hackfrüchte, z.B. Kartoffeln, vor Austrocknung und Sonneneinstrahlung geschützt.

In einer Ausführungsform des Sikkations-Systems ist der Verbindungsabschnitt konfiguriert, um eine lösbare Kopplung an das landwirtschaftliche Nutzfahrzeug herzustellen und erlaubt eine Energieübertragung von dem landwirtschaftlichen Nutzfahrzeug an einen Motor des Sikkations-Systems, der konfiguriert ist, um die rotierbaren Körper zur Rotation anzutreiben. Alternativ kann das Sikkations-System auch fest in einem landwirtschaftlichen Nutzfahrzeug verbaut sein. Die Kraftübertragung erfolgt bevorzugt mechanisch (etwa über Kopplung mit einer Welle des landwirtschaftlichen Nutzfahrzeugs), hydraulisch (Kopplung mit einem Hydraulikschlauch des landwirtschaftlichen Nutzfahrzeugs) oder elektrisch, also über ein Stromkabel oder einen Steckkontakt.

In einer Ausführungsform des Sikkations-Systems umfasst dieses ferner ein Rad (z.B. ein Stützrad zum Abstützen des Aufbaus mit den Quetschkörpern und/oder ein Führungsrad zum Anzeigen einer Fahrtrichtung), das konfiguriert ist, um einen gleichbleibenden Abstand zwischen der Ackerfläche und dem Sikkations-System zu gewährleisten. Das Rad kann beispielsweise über einen fest mit der Verbindungseinheit verbundenen Ausleger mit dem Sikkations-System verbunden sein. Die Rotationsgeschwindigkeit der Quetschkörper der mindestens einen Quetscheinheit wird in Abhängigkeit von der Drehgeschwindigkeit des Rads so gesteuert, dass Umfangsgeschwindigkeit des Rads und die Geschwindigkeiten der einander zugewandten Flächen der Quetschkörper im Bereich des Quetschraums mindestens gleich sind. Bevorzugt sind die Geschwindigkeiten der einander zugewandten Flächen der Quetschkörper im Bereich des Quetschraums etwas schneller, beispielsweise um 1-3% schneller. Durch diese Ausbildung wird ein herausreißen von Pflanzenteilen aus dem Boden vermieden, wie bereits oben im Zusammenhang mit der Steuerung des Sikkations-Systems beschrieben wurde.

Die vorliegende Erfindung ist zudem auf ein landwirtschaftliches Nutzfahrzeug gerichtet. Das landwirtschaftliche Nutzfahrzeug enthält ein Sikkations-Systems gemäß einer der obigen Beschreibungen und einen Motor, der das Nutzfahrzeug antreibt. Der Verbindungsabschnitt des Sikkations-Systems ist zur Energieübertragung von dem Motor and die Quetscheinheit des Sikkations-Systems ausgelegt, wobei die Energieübertragung mechanisch, elektrisch oder hydraulisch erfolgt. Die Verbindungseinheit kann eine dauerhafte Verbindung (integrale Einbindung, Anschweißen) herstellen. Eine lösbare Verbindung (Kopplung, Zapfwelle), etwa zwischen einem Chassis des landwirtschaftlichen Nutzfahrzeugs und dem Sikkations-System, ist jedoch bevorzugt. Das landwirtschaftliche Nutzfahrzeug kann zudem mit weiteren Bearbeitungsmitteln ausgestattet sein, etwa einer Krautschlageinheit, um vor dem Einsatz des Sikkations-Systems einen Großteil von Blättern und Stängeln des Krauts zu entfernen.

Die vorliegende Erfindung ist zudem auf eine Verwendung eines Sikkations-Systems gemäß einer der obigen Beschreibungen zum mechanischen Abtöten von Pflanzen, insbesondere Kartoffelpflanzen, auf Ackerflächen im landwirtschaftlichen Landbau gerichtet. Die Verwendung enthält das Bewegen des Sikkations-Systems durch eine landwirtschaftliches Nutzfahrzeug über eine Ackerfläche, wobei sich die zu Quetschenden Pflanzen in der Erde der Ackerfläche befinden, und das Anwenden des Sikkations-Systems durch Rotieren der Quetschkörper und Quetschen eines Krauts der Pflanzen auf der Ackerfläche, wobei die Pflanze auch nach Anwendung des Sikkations-Systems in der Erde verwurzelt bleibt. Durch die Verwendung werden die oben detailliert beschriebenen Vorteile und Effekte der vorliegenden Erfindung erreicht.

In einer Ausführungsform der Verwendung umfasst dieses ferner das Ausführen von Krautschlagen vor dem Schritt des Anwendens des Sikkations-Systems.

### Kurze Beschreibung der Figuren

Fig. 1 ist eine Perspektivansicht von schräg oben eines Sikkations-Systems gemäß einer bevorzugten Ausführungsform der vorliegenden Erfindung.
Fig. 2 ist eine Perspektivansicht von schräg unten eines Sikkations-Systems gemäß einer bevorzugten Ausführungsform der vorliegenden Erfindung.
Fig. 3 ist eine Draufsicht von unten eines Sikkations-Systems gemäß einer bevorzugten Ausführungsform der vorliegenden Erfindung.
Fig. 4 ist eine Draufsicht von oben eines Sikkations-Systems gemäß einer bevorzugten Ausführungsform der vorliegenden Erfindung.
Fig. 5a-5c sind schematische Ansichten von oben verschiedener Betriebszustände einer Quetscheinheit eines Sikkations-Systems 100 gemäß einer bevorzugten Ausführungsform der vorliegenden Erfindung während der Anwendung zum Quetschen bzw. Abtöten von Pflanzen auf einer Ackerfläche.
Fig. 6 ist eine schematische Seitenansicht eines landwirtschaftlichen Nutzfahrzeugs gemäß einer Ausführungsform der vorliegenden Erfindung.
Fig. 7 ist eine schematische Draufsicht von oben eines landwirtschaftlichen Nutzfahrzeugs gemäß einer Ausführungsform der vorliegenden Erfindung während der Anwendung zum Quetschen bzw. Abtöten von Pflanzen auf einer Ackerfläche.

### Detaillierte Beschreibung bevorzugter Ausführungsformen

Im Folgenden wird die vorliegende Erfindung anhand von Figuren beschrieben, die schematisch verschiedene beispielhafte Ausführungsformen zeigen. Die in den Figuren dargestellten Ausführungsformen sind nicht zwangsläufig maßstabgerecht dargestellt und es können zum Teil Abmessungen gewählt sein, die das Prinzip der vorliegenden Erfindung klarer zur Geltung bringen. Es werden sowohl in der Zeichnung als auch in der Beschreibung gleiche oder ähnliche Bezugszeichen für gleiche oder ähnliche Elemente und Komponenten verwendet. Alle gezeigten und beschriebenen Ausführungsformen sind untereinander ganz oder teilweise kombinierbar, sofern nicht explizit etwas anderes angegeben ist.

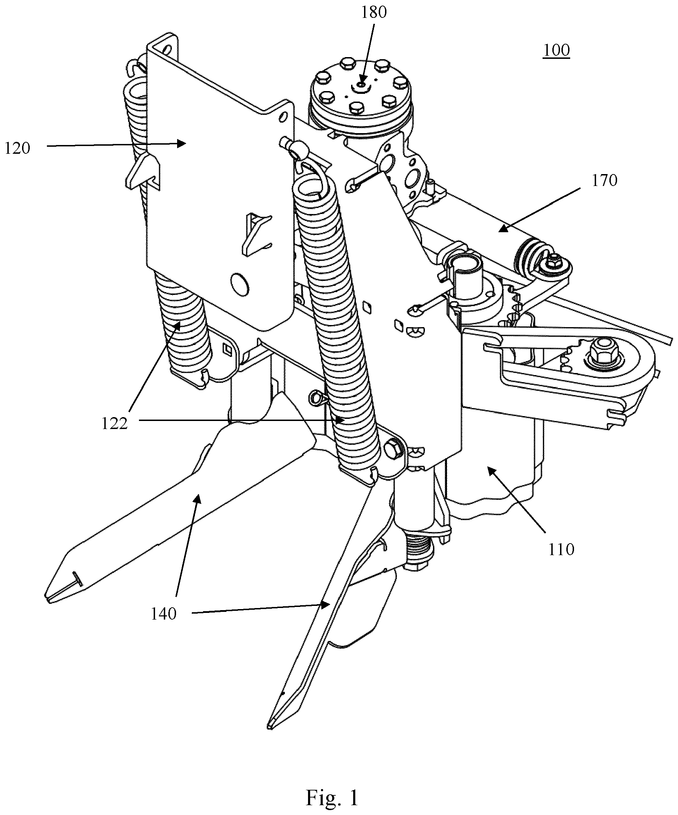

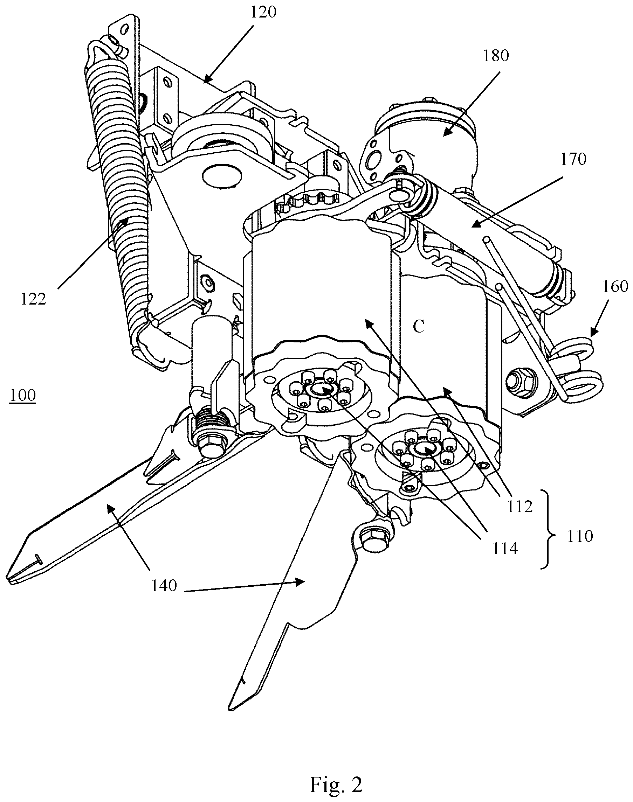

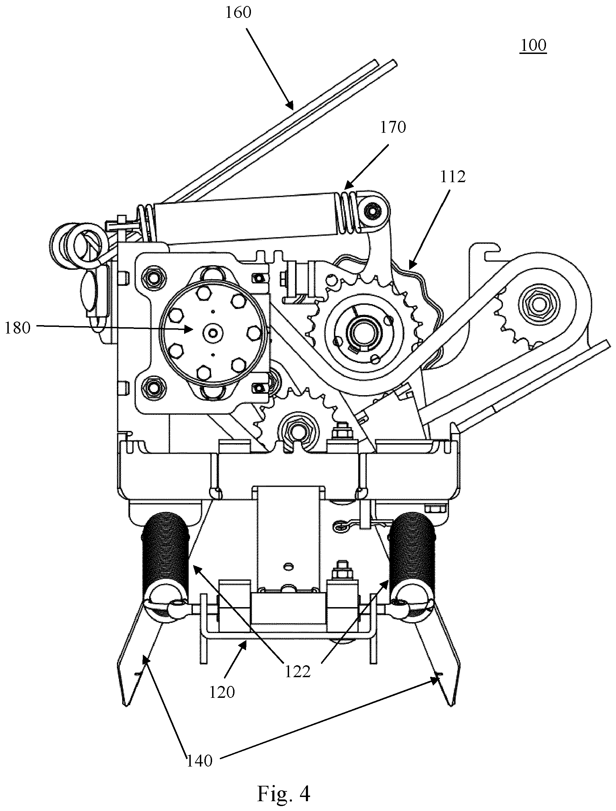

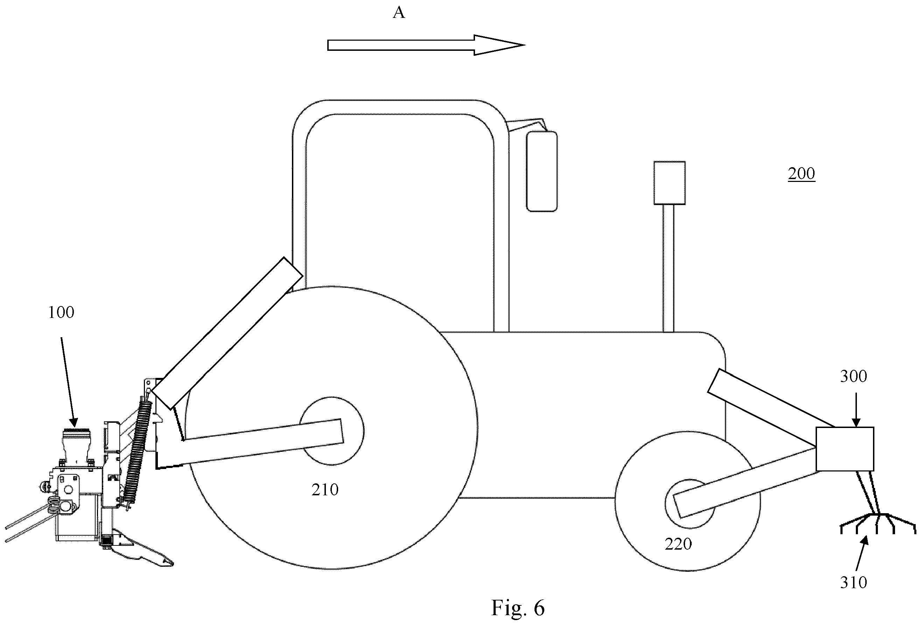

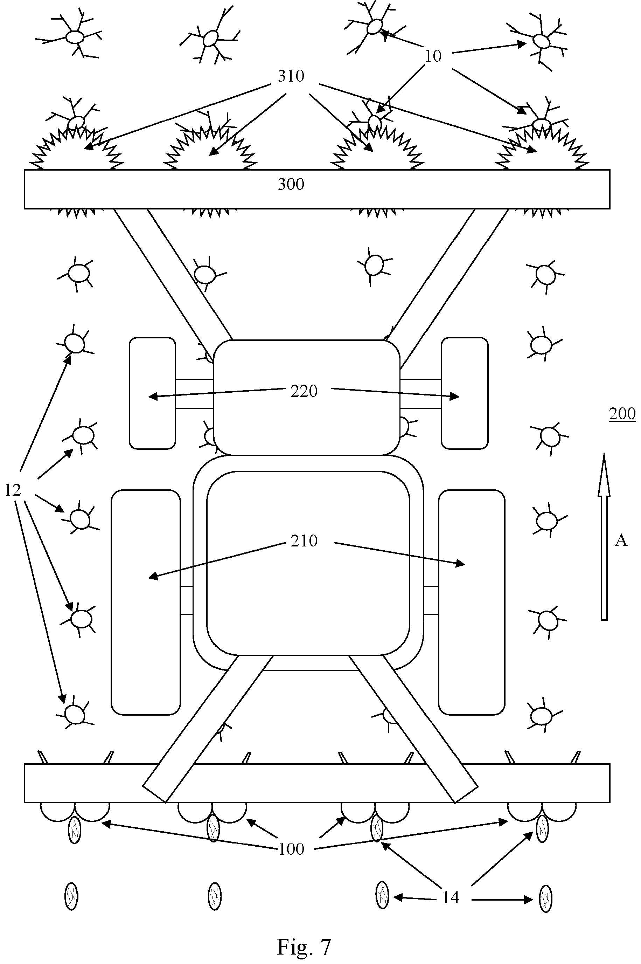

Fig. 1-4 zeigen unterschiedliche Ansichten eines Sikkations-Systems 100 gemäß einer bevorzugten Ausführungsform der vorliegenden Erfindung. Das dargestellte Sikkations-System 100 ist konfiguriert zum mechanischen Abtöten von Pflanzen (nicht dargestellt), insbesondere Kartoffelpflanzen, auf Ackerflächen im landwirtschaftlichen Landbau. Das Sikkations-System 100 wird dafür durch ein landwirtschaftliches Nutzfahrzeug (siehe Fig. 6 und 7) über eine Ackerfläche bewegt, wobei sich die abzutötenden Pflanzen in der Erde der Ackerfläche befinden, also leben und in der Erde verwurzelt sind. Das Sikkations-System 100 ist ferner so konfiguriert, dass die Pflanzen auch nach Anwendung des Sikkations-Systems 100 in der Erde verwurzelt bleiben.

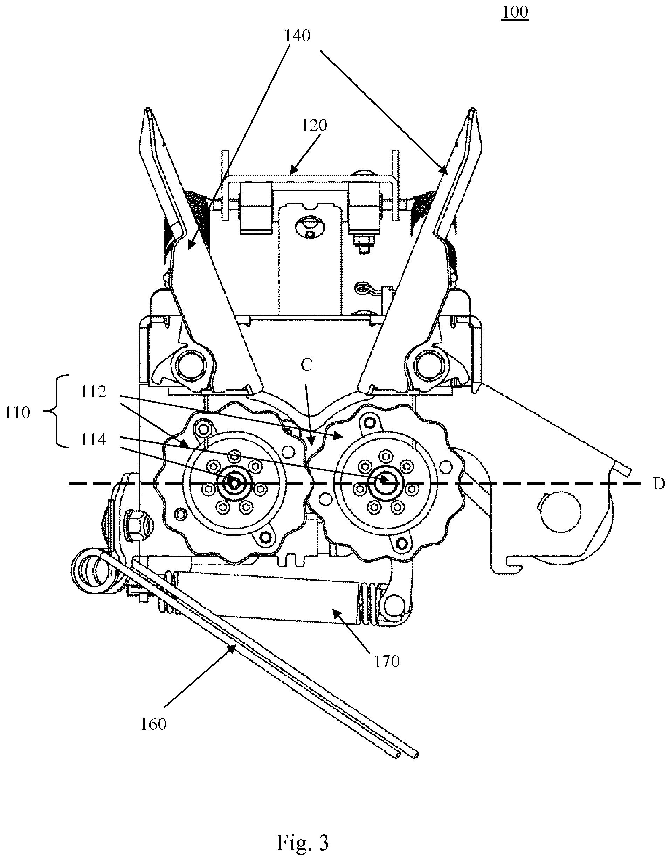

Das Sikkations-System enthält mindestens eine Quetscheinheit 110 und einen Verbindungsabschnitt 120, der konfiguriert, um das Sikkations-System 100 mechanisch mit dem landwirtschaftlichen Nutzfahrzeug zu verbinden. Die mindestens eine Quetscheinheit 110 enthält zwei rotierbare Quetschkörper 112, deren Rotationsachsen 114 im Bereich von ± 5°, bevorzugt ± 2° parallel zueinander sind. Eine gedachte Gerade D (Fig. 3) durch die Rotationsachsen im Wesentlichen senkrecht zur bevorzugten Fahrtrichtung des landwirtschaftlichen Nutzfahrzeugs steht. Ferner sind die Rotationsachsen während des Betriebs bevorzugt im Bereich von ± 15°, weiter bevorzugt ± 10° senkrecht zur Ackerfläche.

Die mindestens zwei rotierbaren Quetschkörper 112 der mindestens einen Quetscheinheit 110 sind so angeordnet, dass zwischen den Quetschkörpern 112 ein Quetschraum C definiert ist, wobei die Rotation der zwei rotierbaren Quetschkörper 112 der mindestens einen Quetscheinheit 110 derart gekoppelt ist, dass ein Kraut der lebenden Pflanzen durch die Rotation der zwei rotierbaren Quetschkörper 112 in den Quetschraum C eingezogen und gequetscht wird.

Die Quetschkörper 112 sind in der gezeigten Ausführungsform als im Wesentlichen walzenförmig dargestellt. Eine Mantelfläche der Walzen kann aus einem gewellten Blech gebildet sein (z.B. Stahlblech) worauf die Erfindung jedoch nicht beschränkt ist. Es sind ebenfalls gerade Mantelflächen, Flächen mit schrägen oder spiralförmig verlaufenden Rillen bzw. Erhebungen oder Mantelflächen, die in der axialen Querschnittsansicht eine Art Zahnradstruktur aufzeigen, möglich. Wichtig für die Funktion der Quetschkörpern 112 ist lediglich, dass deren Mantelflächen während der Rotationsbewegung ineinandergreifen, um ein effektives Quetschen des Pflanzenmaterials zu gewährleisten.

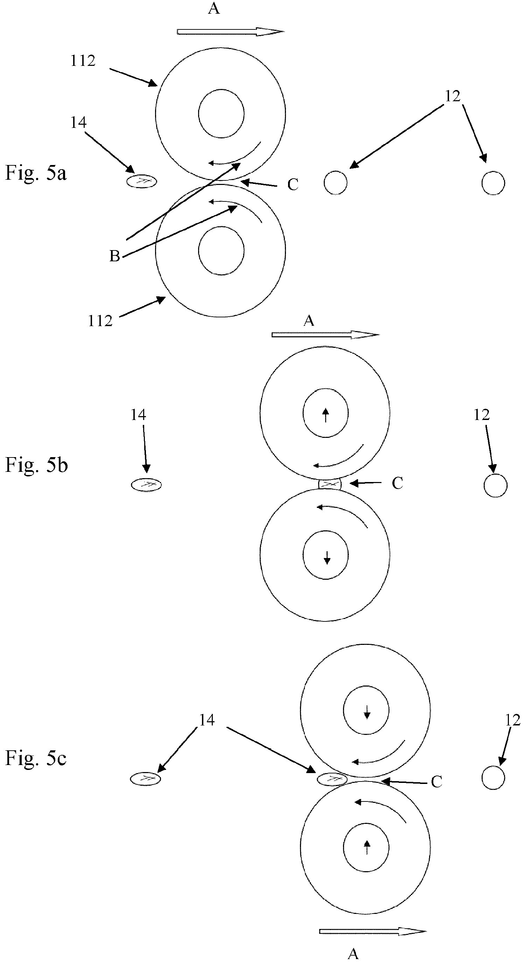

Insbesondere können die Rotationsachsen 114 der Quetschkörper 112, wie dargestellt, durch eine Vorspannfeder 170 in Richtung zueinander vorgespannt und in gewissen Maße relativ zueinander beweglich gelagert sein. Die Vorspannfeder 170 als bevorzugtes Element des Sikkations-Systems 100 ist, wie dargestellt, eine horizontal verlaufende Feder, deren Spannung bevorzugt den Druck der beiden Quetschkörper 112 gegeneinander unterschiedlich stark einstellen lässt. Mit variablem Druck, der durch die Quetschkörper 112 im Quetschraum ausgeübt wird, kann einerseits auf unterschiedlich viel und unterschiedlich widerstandsfähige Pflanzenmasse reagiert werden. Andererseits dient diese Variable der Möglichkeit die Denaturierung der Stängel unterschiedlich stark einzustellen. Diese Variabilität ist bevorzugt, um unterschiedlich stark gereifte Pflanzenteile (Stauden) in verschiedenen Strategien zur Abreife führen zu können. Um eine Staude angepasst an den jeweiligen Reifegrad gezielt in der Reife beschleunigen und die Quetschmaßnahme in eine hieran angepasste Gesamtstrategie eingliedern zu können, sollte hier variiert werden können. So kann der bloße Stängel bzw. Stumpf (12 in Fig. 5 und 7) in einem Zuge soweit denaturiert werden, dass er erwartungsgemäß in der Sonne austrocknet. Alternativ kann er gezielt auf einen nachfolgenden Schritt vorbereitet werden - im konventionellen Anbau könnte nach dem Sikkations-System 100 ein chemisches Sikkativ angewandt werden, im ökologischen beispielsweise das Abflammen. Auch ein weiteres, wenige Tage später folgendes, erneutes Quetschen durch das Sikkations-System 100 in einer ggf. anderen Einstellung würde eine effektive Maßnahme darstellen.

Der in den Figuren dargestellte Quetschraum C befindet sich zwischen den einander zugewandten Seiten der Quetschkörper 112. Die Walzen sind bevorzugt in einem Abstand von ca. 1-3 mm angeordnet, wenn keine externe Kraft (etwa durch eingezogenes Pflanzenmaterial) anliegt. Die Auslenkung (größter Mindestabstand) zwischen den Quetschkörpern 112 sollte wenigstens 3 cm, bevorzugt wenigstens 5 cm betragt. Die Erfindung kann jedoch ohne Auslenkbarkeit der Quetschkörper 112 zueinander, also mit festem relativem Abstand zwischen den Quetschkörpern 112 umgesetzt werden. Auch eine Anordnung, in der die Quetschkörper 112 sich ohne externe Kraft (Ruhezustand) gegenseitig berühren ist eine mögliche alternative Ausführungsform.

Sind die beiden Quetschkörper 112 der Quetscheinheit 110, wie dargestellt, federnd gelagert, so ist eine Vorspannungskraft bevorzugt, die einer in Richtung der Rotationsachse des jeweils anderen Quetschkörpers 112 wirkenden Feder mit Federkonstante zwischen 1.000 N/m und 100.000 N/m, bevorzugt zwischen 5.000 N/m und 10.000 N/m entspricht. Diese Federkraft bzw. wirkende Federkonstante kann auf bekannte Weise zwischen den Mitten der Rotationsachse 114 gemessen werden. Die Federkraft bzw. wirkende Federkonstante wird in der dargestellten Ausführungsform durch die Vorspannfeder 170 bereitgestellt. In einer Ausführungsform hat die gezeigte Vorspannfeder 170 eine Federkonstante zwischen 2.000 N/m und 20.000 N/m, bevorzugt zwischen 5.000 N/m und 10.000 N/m. Die Erfindung ist jedoch nicht auf die gezeigt Ausbildung beschränkt und Alternative Methoden zur Bereitstellung einer Vorspannkraft können verwendet werden, beispielsweise Gummizüge, Blattfedern, Luft- bzw. Gasfedern etc. Alternativ können die beiden Quetschkörper der Quetscheinheit auch so zueinander gelagert sein, dass diese bis zum Aufbringen einer gewissen Kraft ("Trennkraft") einen konstanten Abstand haben bzw. einander berühren. Die Trennkraft beträgt bevorzugt zwischen 1-100 Kg und kann durch eine Kombination aus Federn und Dämpfern umgesetzt werden.

Ein häufiges Problem bei der Abreifesteuerung (Sikkation) besteht in der Erfassung nach unten gekippter, in die Dammsohlen/Dammfurchen (nicht dargestellt) liegender Triebe. Selbst nach einem Krautschlagen (siehe Fig. 6 und 7 mit Beschreibung weiter unten) sind die verbleibenden Stümpfe (12 in Fig. 5 und 7) in manchen Fällen zur Seite oder gar nach unten geneigt. In einem ersten bevorzugten Schritt während der Verwendung des Sikkations-Systems geht es also darum, diese Abweichler möglichst vollständig mit zu erfassen und der Quetschung in Quetschraum C zwischen den Quetschkörpern 112 zuzuführen. Zu diesem Zweck ist das erste Bauteil der auf dem Damm geführten Maschine ein zu beiden Seiten des Dammes schräg nach unten greifender Holm, der hier als Führungsarm 140 bezeichnet wird. Beide Führungsarme 140 erfassen seitlich geneigte Triebe und führen Sie schräg nach oben, richten Sie hierbei auf und führen sie auf der Dammkrone zusammen und somit dem Quetschraum zu. Die Führungsarme 140 sind jedoch optional und können auch durch andere geeignete Mittel ersetzt oder weggelassen werden. Die Erfindung ist nicht auf die Verwendung dieser beschränkt.

Die optionalen Führungsarme 140 der vorliegenden Ausführungsform sind bezogen auf eine Ebene senkrecht zu den Rotationsachsen der Quetschkörper 112 von dem unteren Ende der Quetscheinheit 110 um einen Winkel von 10° bis 40°, bevorzugt 15° bis 30° von der Quetscheinheit weg nach unten geneigt. Die zwei Führungsarme 140 schließen bevorzugt in der Ebene senkrecht zu den Rotationsachsen der Quetschkörper einen Winkel von 30° bis 60°, weiter bevorzugt 40° bis 50° ein. Auf diese Weise wird gewährleistet, dass die Führungsarme im Betriebe gleichmäßig über einen Ackerdamm (nicht dargestellt) streichen. Um Unebenheiten im Untergrund bzw. Schrägstellungen des landwirtschaftlichen Nutzfahrzeugs auszugleichen und Schäden durch Stöße zu verhindern, ist das Sikkations-System bevorzugt durch Federn 122 der Verbindungseinheit 120 gelagert bzw. mit dem landwirtschaftlichen Nutzfahrzeug verbunden. Die Feder 122 kann auch so gewählt sein, dass das Sikkations-System mit einer geringen Gewichtskraft über den Ackerdamm geführt wird.

Die optionalen Führungsarme 140 und zwei Linien (nicht gezeigt), die jeweils obere und unteren Enden der Führungsarme 140 miteinander verbinden, bilden senkrecht projiziert auf eine Ebene, in der die beiden Rotationsachsen der Quetschkörper liegen, einer Trapezoid-Form, dessen parallele Seiten ein Verhältnis von 1:2 bis 1:3 aufweisen und dessen Schenkel zur längeren der parallelen Seiten jeweils einen Winkel zwischen 25° und 60°, bevorzugt zwischen 35° und 45° einschließen. Auf diese Weise wird eine weitere, verbesserte Anpassung der Führungsarme 140 im Betriebe an einen Ackerdamm erreicht. Um zu verhindern, dass die Führungsarme 140 bei Streichen über den Damm steckenbleiben, sich eingraben oder den Damm aufreißen, weisen die Führungsarme 140 jeweils bevorzugt einen V-förmigen Querschnitt auf. Die untere Schnittstellen der V-Formen der beiden Führungsarme 140 sind dabei einander zugewandt.

Das Sikkations-System 100 enthält in der dargestellten Ausführungsform zudem eine optionale Ablageeinheit 160, die die Pflanzenteile nach dem Durchlauf durch den Quetschraum zu einer Seite des Damms ablegt. Auf diese Weise wird die gleichmäßige Ablage des Pflanzenmaterials gefördert und das anschließende Abtrocknen bzw. Absterben der Pflanzen erreicht. Auch wird ein Einwaschen von Pflanzensaft in den Damm reduziert, um Ausbereitung von Krankheiten zu verhindern. So kann eventuell nötiges Desinfektionsmittel eingespart werden.

Die Wirkung der Quetscheinheit 110 selbst basiert in der vorliegenden Ausführungsform im Wesentlichen auf zwei aufrecht-zylindrisch auf der Dammkrone geführten, gegenläufigen Walzen (d.h. den Quetschkörpern 112) mit einer wellenförmigen Stahloberfläche. Beide Quetschkörper 112 sind in einer bevorzugten Ausführungsform mit 10-20 cm Durchmesser, bevorzugt 13-17 cm Durchmesser im Wesentlichen gleich stark. Das Profil der beiden Quetschkörper 112 greift bevorzugt, wie bei Zahnrädern, ineinander.

Die Quetschkörper 112 werden bevorzugt synchron über eine mit einem Motor oder dergleichen verbunden Riemen oder eine Kette angetrieben, beispielsweise über einen Ölmotor oder einen Hydraulikmotor 180, sodass beide Quetschkörper 112 in der Drehgeschwindigkeit synchron rotieren. Die Erfindung soll jedoch nicht darauf beschränkt sein und die Quetschkörper 112 können auch unterschiedlich angetrieben werden. Der Antrieb wird in der dargestellten Ausführungsform durch Motor 180 und eine geeignet geführte Kette (kein Bezugszeichen) erreicht. Dem Fachmann sind geeignete Alternativen zum gewünschten Antrieb der Quetschkörper 112 bekannt und die Erfindung soll nicht auf die gezeigt Antriebsweise beschränkt sein. Alternativen wäre beispielsweise eine individuelle Steuerung jedes Quetschkörpers 112, Antrieb durch einen Elektromotor oder über eine angeschlossene Zapfwelle des landwirtschaftlichen Nutzfahrzeugs. In einer bevorzugten Einstellung sollten beide Walzen so schnell rotieren, dass die Geschwindigkeit der eingezogenen Pflanzenteile durch die Quetschkörper 112 gleich oder etwas höher ist als die Vorfahrtsgeschwindigkeit des sie antreibenden landwirtschaftlichen Nutzfahrzeugs. So wird verlässlich verhindert, dass Triebe ausgerissen werden. Jeder der für sich eigens angetriebenen Quetschkörper 112 ist einzeln aufgehängt, beispielsweise ist einer der Quetschkörper an einem starren Rahmen befestigt, der andere federnd gelagert, um Stöße oder Schläge durch eingezogene Steine auszugleichen.

Fig. 5a-c sind schematische Ansichten von oben verschiedener Betriebszustände einer Quetscheinheit eines Sikkations-Systems gemäß einer bevorzugten Ausführungsform der vorliegenden Erfindung während der Anwendung zum Quetschen bzw. Abtöten von Pflanzen auf einer Ackerfläche. In den Ansichten der Fig. 5a-c ist jeweils die gleiche Reihe von Pflanzenteilen (Stiel, geschlagenes Kraut) 12 gezeigt. Wie bereits oben beschrieben, ist eine vorige Anwendung von Krautschlagen (siehe Fig. 6 und 7) in der vorliegenden Erfindung bevorzugt, jedoch optional. Die Fig. 5a-c lasen sich somit identisch auf ungeschlagene Pflanzen (10 in Fig. 7) übertragen.

Die Quetschkörper 112 werden in Fig. 5a-c durch ein landwirtschaftliches Nutzfahrzeug (nicht gezeigt) in Fahrtrichtung A über eine Ackerfläche bewegt. Die Rotationsrichtungen B der Quetschkörper 112 sind in Fig. 5a angedeutet. Erreichen die Quetschkörper 112, wie in Fug. 5b dargestellt, eine Pflanze 12, tritt diese in den Quetschraum C ein und wird durch die Rotation der Quetschkörper 112 gequetscht. Die Quetschkörper 112 bewegen sich dabei, wie durch die Pfeile im Bereich der Rotationsachsen (kein Bezugszeichen) angedeutet, von einander weg. Verlässt das gequetschte Pflanzenteil 14, wie in Fig. 5c dargestellt, den Quetschraum C wieder, bewegen sich die Quetschkörper 112 wieder auf Ausgangstellung zurück, bis die nächste Pflanze erreicht ist. Es sei angemerkt, dass die Quetschkörper 112 mit kreisrunden Mantelflächen dargestellt sind. Die Erfindung ist jedoch, darauf, wie bereits oben im Detail beschrieben, nicht beschränkt und gewellte, gezahnte oder anderweitig verformte Profile sind möglich. Auch ist die Erfindung nicht auf die dargestellte Walzenform beschränkt. Kegelstumpf-förmige Quetschkörper bilden eine bevorzugte Alternative, wodurch ein bevorzugtes Quetschkraftprofil erreicht werden kann, das beispielsweise in Richtung Boden etwas zu- oder abnimmt.

Fig. 6 ist eine schematische Seitenansicht eines landwirtschaftlichen Nutzfahrzeugs 200 gemäß einer Ausführungsform der vorliegenden Erfindung. Das dargestellte Fahrzeug 200 weist zwei Hinterräder 210 und zwei Vorderräder 220 (in der Seitenansicht nur eines dargestellt) auf. Die bevorzugte Fahrtrichtung ist durch Pfeil A angedeutet. Im vorderen Bereich des Fahrzeugs 200 ist eine Krautschlageeinheit 300 vorgesehen. Im hinteren Bereich des Fahrzeugs ist das erfindungsgemäße Sikkations-System 100 vorgesehen. Die Krautschlageeinheit 300 ist jedoch optional. Zudem sind andere bevorzugte Krautschlageeinheiten, anstatt mit den dargestellten, um eine vertikale Achse rotierender Klingen oder dergleichen, mit einem um eine horizontale Achse rotierende Element ausgestattet. Ebenso ist es möglich, dass Krautschlageeinheit 300 und Sikkations-System 100 an der gleichen Seite des Fahrzeugs 200 vorgesehen sind oder neben dem Fahrzeug 200 geführt werden. Wichtig ist lediglich, dass das Krautschlagen, so es denn mit dem Fahrzeug 200 vorgesehen und durchzuführen ist, vor der Anwendung des Sikkations-Systems 100 verwendet wird, also in Fahrtrichtung A vor dem Sikkations-System 100 angeordnet ist.

Das dargestellte Fahrzeug 200 sollte zudem nur als eine mögliche Ausführungsform verstanden werden. Alternativ könnten Fahrzeuge mit mehr Achsen, zusätzliche Führung- oder Stützräder für Krautschlageeinheit 300 und/oder Sikkations-System 100, Rahmen oder dergleichen vorgesehen sein. Auch können Sikkations-System 100 und/oder Krautschlageeinheit 300 fest in dem Fahrzeug verbaut sein oder mit weiteren Modulen kombiniert werden, etwa einer Einheit zum Versprühen eines chemischen Sikkations-Mittels.

Fig. 7 ist eine schematische Draufsicht von oben eines landwirtschaftlichen Nutzfahrzeugs 200 gemäß einer Ausführungsform der vorliegenden Erfindung während der Anwendung zum Quetschen bzw. Abtöten von Pflanzen 10, 12, 14 auf einer Ackerfläche.

Eine bevorzugte Vorarbeit für den Einsatz des Sikkations-Systems 100 wird von einem herkömmlichen Krautschläger 300 geleistet. Hiermit werden die Stümpfe auf eine einstellbare Restlänge (bevorzugt etwa 5-30cm, besonders bevorzugt 10-20cm) eingekürzt und können so unmittelbar danach optimal dem Sikkations-System 100 erfasst werden. Der Krautschläger 300 kann hierzu in Front des Fahrzeugs 200 angebracht sein, wobei das Sikkations-System 100 im Heckanbau betrieben wird. Eine andere Ausführungsform sieht das Sikkations-System am vorderen Ende des landwirtschaftlichen Fahrzeugs vor. Eine weitere Variante ist die Anbringung des Sikkations-Systems 100 direkt hinterhalb des Krautschlägers 300. Auch eine separate Nutzung von Krautschläger 300 und Sikkations-System 100 in zwei Überfahrten bleibt selbstverständlich eine Option.

In Fig. ist ebenfalls schematische die Abfolge der Bearbeitungsschritte, die bereits in Fig. 5a-c beschrieben wurden, dargestellt. Insbesondere nähert sich das Fahrzeug 200 in Fahrtrichtung A den unbearbeiteten Pflanzen 10. Die Schlagwerkzeuge 310 der Krautschlageinheit 300 entfernen so dann Blätter und stutzen die Pflanzen 12. Nach Überfahrt (das Fahrzeug fährt dabei üblicherweise zwischen den nicht dargestellten Dämmen, also zwischen den Pflanzenreihen) des Fahrzeugs 200 gelangen die gestutzten Pflanzen 12 in den Wirkungsbereich des Sikkations-Systems 100 der vorliegenden Erfindung. Wie mit Bezug auf Fig. 5a-c beschrieben, werden die Pflanzenteile 12 gequetscht und bleiben als gequetschte Pflanzenteile 14 in der Erde verankert zurück.

Das Verschließen von witterungsbedingten Rissen der Erde auf der Dammkrone kann einen wesentlichen Beitrag zur Vermeidung grüner Knollen leisten. Dieser Effekt kann im Falle nachlaufender Dammdruckrollen oder Reifen bestens erreicht werden, wobei auch ein leichtes Aufsetzen der Quetschwalzen diesen Effekt erreichen kann. Insbesondere bei verhärteten, festen Dammoberflächen ist die rotierend-reibende Bewegung der Walzen hierfür bestens wirksam und kann durch entsprechende Profile auf der Walzenunterseite angepasst werden.

### Vergleich und Kombination der Erfindung mit anderen Verfahren

-Chemische Krautregulierung wird für gewöhnlich mit einer Feldspritze umgesetzt. Sie beruht auf der herbiziden bzw. austrocknenden Wirkung eines chemischsynthetischen oder auch natürlich gewonnenen Wirkstoffes, der im Zuge der Maßnahme auf das Blattwerk oder die Stängel der Kartoffelstauden gespritzt wird, wodurch diese absterben bzw. vertrocknen (Sikkation). Eine chemische Krautregulierung kann sowohl vor als auch nach der Anwendung des vorliegenden Sikkations-Systems erfolgen, ggf. sogar auch in direkter Kombination.

-Der klassische Krautschläger, der als optimale Maschine für die Kombination mit dem vorliegenden Sikkations-System angesehen werden kann, trennt Teile des (Kartoffel-)Krautes über rotierende Schlagwerkzeuge ab. In der Länge an die Dammkontur angepasste Schlagwerkzeuge rotieren an einer durchgängigen Welle mit hoher Drehzahl und erzeugen so ein Abschlagen bzw. Abreißen der nach oben stehenden Pflanzenteile. Über die Tiefenführung der Maschine werden die Intensität und die Reststängellänge eingestellt. Das abgetrennte Pflanzenmaterial wird bei neueren Maschinen über spezielle, innen im Gehäuse angebrachte Leitbleche in die Dammsohlen abgelegt. Im Falle eine Kombination von Krautschläger im Frontanbau des Schleppers mit dem vorliegenden Sikkations-System im Heck besteht der Vorteil, dass weniger Triebe erst vom Schlepperreifen erfasst und in die Dammsohlen gedrückt werden als beim Krautschlagen im Schlepperheck.

Die vorliegende Offenbarung betrifft zudem eine Verwendung eines Sikkations-Systems gemäß einer der obigen oder in den beigefügten Schutzansprüchen definierten Ausführungsform der Erfindung. Die Verwendung dient zum mechanischen Abtöten von Pflanzen, insbesondere Kartoffelpflanzen, auf Ackerflächen im landwirtschaftlichen Landbau. Die Verwendung umfasst das Bewegen des Sikkations-Systems durch eine landwirtschaftliches Nutzfahrzeug über eine Ackerfläche, wobei sich die Pflanzen in der Erde der Ackerfläche befinden, und das Anwenden des Sikkations-Systems durch Rotieren der Quetschkörper und Quetschen eines Krauts der Pflanzen auf der Ackerfläche so, dass die Pflanzen auch nach Anwendung des Sikkations-Systems in der Erde verwurzelt bleiben.

Die Verwendung kann ferner das Ausführen von Krautschlagen vor, während oder nach, bevorzugt vor dem Schritt des Anwendens des Sikkations-Systems umfassen.

Es wird für Fachleute offensichtlich sein, dass verschiedene Modifikationen und Variationen an der Struktur der vorliegenden Erfindung vorgenommen werden können, ohne den Schutzbereich oder das Wesen der Erfindung zu verlassen. Hinsichtlich der vorhergehenden Ausführungen ist es beabsichtigt, dass die vorliegende Erfindung Modifikationen und Variationen dieser Erfindung überdeckt, falls sie in den Schutzbereich der folgenden Ansprüche und ihrer Äquivalente fallen.

### BEZUGSZEICHENLISTE

- 10: Pflanzenteile (Kraut)
- 12: Pflanzenteile (Stiel, geschlagenes Kraut)
- 14: gequetschte Pflanzenteile
- 100: Sikkations-System
- 110: Quetscheinheit
- 112: rotierbare Quetschkörper
- 114: Rotationsachse
- 120: Verbindungsabschnitt
- 122: Federn des Verbindungsabschnitts
- 140: Führungsarme
- 160: Ablageeinheit
- 170: Vorspannfeder
- 180: Motor
- 200: landwirtschaftliches Nutzfahrzeug
- 300: Krautschlageinheit
- A: Bewegungsrichtung
- B: Rotationsrichtung
- C: Quetschraum
- D: gedachte Gerade durch die Rotationsachsen

## Patentansprüche

1. Sikkations-System (100) zum mechanischen Abtöten von Pflanzen (10, 12, 14), insbesondere Kartoffelpflanzen, auf Ackerflächen im landwirtschaftlichen Landbau, das konfiguriert ist, um durch ein landwirtschaftliches Nutzfahrzeug (200) über eine Ackerfläche bewegt zu werden, wobei sich die Pflanzen (10, 12, 14) in der Erde der Ackerfläche befinden und das Sikkations-System (100) so konfiguriert ist, dass die Pflanzen (10, 12, 14) auch nach Anwendung des Sikkations-Systems (100) in der Erde verwurzelt bleiben, wobei das Sikkations-System (100) umfasst:
mindestens eine Quetscheinheit (110); und
einen Verbindungsabschnitt (120), der konfiguriert, um das Sikkations-System (100) mechanisch mit dem landwirtschaftlichen Nutzfahrzeug (200) zu verbinden, wobei
die mindestens eine Quetscheinheit (110) zwei rotierbare Quetschkörper (112) umfasst, und eine gedachte Gerade (D) durch Rotationsachsen (114) der zwei rotierbaren Quetschkörper (112) im Wesentlichen senkrecht zur bevorzugten Fahrtrichtung (A) des landwirtschaftlichen Nutzfahrzeugs (200) steht,
wobei die zwei rotierbaren Quetschkörper (112) der mindestens einen Quetscheinheit (110) so angeordnet sind, dass zwischen den Quetschkörpern (112) ein Quetschraum (C) definiert ist, wobei die Rotation der zwei rotierbaren Quetschkörper (112) der mindestens einen Quetscheinheit (110) derart gekoppelt ist, dass ein Kraut der lebenden Pflanzen (10, 12, 14) durch die Rotation der zwei rotierbaren Quetschkörper (112) in den Quetschraum (C) eingezogen und gequetscht wird.

2. Sikkations-System (100) gemäß Anspruch 1, wobei die Rotationsachsen (114) während des Betriebs im Bereich von ± 15°, bevorzugt ± 10° senkrecht zur Ackerfläche sind; und/oder die Rotationsachsen (114) im Bereich von ± 30°, bevorzugt ± 15°, besonders bevorzugt ± 5° parallel zueinander sind.

3. Sikkations-System (100) gemäß Anspruch 1 oder 2, wobei sich die einander zugewandten Oberflächen der rotierbaren Quetschkörper (112) im Bereich des Quetschraums (C) mit der gleichen Umlaufgeschwindigkeit und in die gleiche Richtung bewegen, so dass das Kraut eingezogen und gequetscht wird.

4. Sikkations-System (100) gemäß einem der vorstehenden Ansprüche, weiterhin umfassend eine Steuerung, die die Rotation der rotierbaren Quetschkörper (112) so steuert, dass die Geschwindigkeit der einander zugewandten Flächen der Quetschkörper (112) im Bereich des Quetschraums (C) mindestens gleich der oder schneller als die Fahrtgeschwindigkeit des landwirtschaftlichen Nutzfahrzeugs (200) ist.

5. Sikkations-System (100) gemäß einem der vorstehenden Ansprüche, wobei die rotierbaren Quetschkörper (112) im Wesentlichen eine Walzenform oder eine sich nach unten leicht verjüngende Kegelstumpfform aufweisen und wobei die Walzen bevorzugt im Wesentlichen den gleichen Durchmesser aufweisen.

6. Sikkations-System (100) gemäß einem der vorstehenden Ansprüche, wobei die beiden Quetschkörper (112) der Quetscheinheit (110) federnd gelagert sind, mit einer Vorspannungskraft, die einer in Richtung der Rotationsachse des jeweils anderen Quetschkörpers (112) wirkenden Feder mit Federkonstante zwischen 1.000 N/m und 100.000 N/m, bevorzugt zwischen 5.000 N/m und 10.000 N/m entspricht; oder
wobei die beiden Quetschkörper (112) der Quetscheinheit (110) so zueinander gelagert sind, dass diese bis zum Aufbringen einer Trennkraft einen konstanten Abstand haben oder einander berühren, wobei die Trennkraft zwischen 1-100 Kg beträgt.

7. Sikkations-System (100) gemäß einem der vorstehenden Ansprüche, weiterhin umfassend zwei Führungsarme (140), die sich von einer Position des Sikkations-Systems (100) an einem unteren Ende der Quetscheinheit (110) erstrecken, um das Kraut (10, 12, 14) einem Einzugsbereich des Quetschraums (C) der Quetscheinheit (110) zuzuführen.

8. Sikkations-System (100) gemäß Anspruch 7, wobei die Führungsarme (140) bezogen auf eine Ebene senkrecht zu den Rotationsachsen (114) der Quetschkörper (112) von dem unteren Ende der Quetscheinheit (110) um einen Winkel von 10° bis 40°, bevorzugt 15° bis 30° von der Quetscheinheit (110) weg nach unten geneigt sind und die zwei Führungsarme (140) in der Ebene senkrecht zu den Rotationsachsen (114) der Quetschkörper (112) einen Winkel von 30° bis 60°, bevorzugt 40° bis 50° einschließen.

9. Sikkations-System (100) gemäß Anspruch 7 oder 8, wobei die Führungsarme (140) und zwei Linien, die jeweils obere und unteren Enden der Führungsarme (140) miteinander verbinden, senkrecht projiziert auf eine Ebene, in der die beiden Rotationsachsen (114) der Quetschkörper (112) liegen, einer Trapezoid-Form bilden, dessen parallele Seiten ein Verhältnis von 1:2 bis 1:3 aufweisen und dessen Schenkel zur längeren der parallelen Seiten jeweils einen Winkel zwischen 25° und 60°, bevorzugt zwischen 35° und 45° einschließen.

10. Sikkations-System (100) gemäß einem der Ansprüche 7-9, wobei die Führungsarme (140) jeweils einen V-förmigen Querschnitt aufweisen und die untere Schnittstellen der V-Formen der beiden Führungsarme (140) einander zugewandt sind.

11. Sikkations-System (100) gemäß einem der vorstehenden Ansprüche, wobei der Verbindungsabschnitt (120) konfiguriert ist, um eine lösbare Kopplung an das landwirtschaftliche Nutzfahrzeug (200) herzustellen und eine Energieübertragung von dem landwirtschaftlichen Nutzfahrzeug (200) an einen Motor des Sikkations-Systems (100) erlaubt, der konfiguriert ist, um die rotierbaren Quetschkörper (112) zur Rotation anzutreiben.

12. Sikkations-System (100) gemäß einem der vorstehenden Ansprüche, ferner umfassend
ein Rad, das konfiguriert ist, um einen gleichbleibenden Abstand zwischen der Ackerfläche und dem Sikkations-System (100) zu gewährleisten, und
wobei die Rotationsgeschwindigkeit der Quetschkörper (112) der mindestens einen Quetscheinheit (110) in Abhängigkeit von der Drehgeschwindigkeit des Rads so gesteuert wird, dass Umfangsgeschwindigkeit des Rads und die Geschwindigkeit der einander zugewandten Flächen der Quetschkörper (112) im Bereich des Quetschraums (C) gleich sind oder die Geschwindigkeit der einander zugewandten Flächen der Quetschkörper (112) im Bereich des Quetschraums (C) höher ist.

13. Landwirtschaftliches Nutzfahrzeug (200), umfassend:
ein Sikkations-Systems (100) gemäß einem der vorstehenden Ansprüche;
einen Motor, der das Nutzfahrzeug (200) antreibt, wobei der Verbindungsabschnitt (120) des Sikkations-Systems (100) zur Energieübertragung von dem Motor and die Quetscheinheit (110) des Sikkations-Systems (100) ausgelegt ist, wobei die Energieübertragung mechanisch, elektrisch oder hydraulisch erfolgt.

## Claims

1. Desiccation system (100) for mechanically killing plants (10, 12, 14), in particular potato plants, on arable land in agricultural farming, which is configured to be moved across arable land by an agricultural utility vehicle (200), wherein the plants (10, 12, 14) are located in the soil of the arable land and the desiccation system (100) is configured such that the plants (10, 12, 14) also remain rooted in the soil after application of the desiccation system (100), wherein the desiccation system (100) comprises:
at least one crushing unit (110); and
a connecting portion (120) configured to mechanically connect the desiccation system (100) to the agricultural utility vehicle (200), wherein
the at least one crushing unit (110) comprises two rotatable crushing bodies (112), and an imaginary straight line (D) through rotation axes (114) of the two rotatable crushing bodies (112) is substantially perpendicular to the preferred travelling direction (A) of the agricultural utility vehicle (200),
wherein the two rotatable crushing bodies (112) of the at least one crushing unit (110) are arranged such that a crushing space (C) is defined between the crushing bodies (112), wherein the rotation of the two rotatable crushing bodies (112) of the at least one crushing unit (110) is coupled such that a haulm of the living plants (10, 12, 14) is drawn into the crushing space (C) and crushed by the rotation of the two rotatable crushing bodies (112).

2. Desiccation system (100) according to claim 1, wherein the rotation axes (114) during operation are in the range of ± 15°, preferably ± 10° perpendicular to the arable surface; and/or the rotation axes (114) are in the range of ± 30°, preferably ± 15°, particularly preferably ± 5° parallel to each other.

3. Desiccation system (100) according to claim 1 or 2, wherein the mutually facing surfaces of the rotatable crushing bodies (112) in the region of the crushing space (C) move at the same rotational speed and in the same direction, so that the haulm is drawn in and crushed.

4. Desiccation system (100) according to one of the preceding claims, further comprising a control system which controls the rotation of the rotatable crushing bodies (112) in such a way that the speed of the surfaces of the crushing bodies (112) facing each other in the region of the crushing space (C) is at least equal to or faster than the travelling speed of the agricultural utility vehicle (200).

5. Desiccation system (100) according to one of the preceding claims, wherein the rotatable crushing bodies (112) essentially have a roller shape or a slightly downwardly tapering truncated cone shape and wherein the rollers preferably have essentially the same diameter.

6. Desiccation system (100) according to one of the preceding claims, wherein the two crushing bodies (112) of the crushing unit (110) are resiliently supported, with a pretensioning force corresponding to a spring with a spring constant between 1,000 N/m and 100,000 N/m, preferably between 5,000 N/m and 10,000 N/m, acting in the direction of the axis of rotation of the respective other crushing body (112); or
wherein the two crushing bodies (112) of the crushing unit (110) are supported relative to one another in such a way that they are at a constant distance or in contact with one another until a separating force is applied, wherein the separating force is between 1-100 kg.

7. Desiccation system (100) according to any of the preceding claims, further comprising two guide arms (140) extending from a position of the desiccation system (100) at a lower end of the crushing unit (110) to feed the haulm (10, 12, 14) to an intake region of the crushing space (C) of the crushing unit (110).

8. Desiccation system (100) according to claim 7, wherein the guide arms (140), relative to a plane perpendicular to the rotation axes (114) of the crushing bodies (112), extend from the lower end of the crushing unit (110) by an angle of 10° to 40°, preferably 15° to 30° down and away from the crushing unit (110) and the two guide arms (140) enclose an angle of 30° to 60°, preferably 40° to 50°, in the plane perpendicular to the rotation axes (114) of the crushing bodies (112).

9. Desiccation system (100) according to claim 7 or 8, wherein the guide arms (140) and two lines, which respectively connect the upper and lower ends of the guide arms (140) with each other, form a trapezoidal shape projected perpendicularly to a plane in which the two rotation axes (114) of the crushing bodies (112) lie, the parallel sides of which have a ratio of 1:2 to 1:3 and the legs of which enclose an angle of between 25° and 60°, preferably between 35° and 45°, to the longer of the parallel sides.

10. Desiccation system (100) according to one of claims 7-9, wherein the guide arms (140) each have a V-shaped cross-section and the lower interfaces of the V-shapes of the two guide arms (140) face each other.

11. Desiccation system (100) according to any one of the preceding claims, wherein the connecting portion (120) is configured to detachably couple to the agricultural utility vehicle (200) and allow power transmission from the agricultural utility vehicle (200) to a motor of the desiccation system (100) configured to drive the rotatable crushing bodies (112) for rotation.

12. Desiccation system (100) according to any of the preceding claims, further comprising
a wheel configured to ensure a constant distance between the arable surface and the desiccation system (100), and
wherein the rotational speed of the crushing bodies (112) of the at least one crushing unit (110) is controlled in dependence on the rotational speed of the wheel such that the circumferential speed of the wheel and the speed of the facing surfaces of the crushing bodies (112) in the region of the crushing space (C) are equal or the speed of the facing surfaces of the crushing bodies (112) in the region of the crushing space (C) is higher.

13. Agricultural utility vehicle (200), comprising
a desiccation system (100) according to any one of the preceding claims;
a motor driving the utility vehicle (200), wherein the connecting portion (120) of the desiccation system (100) is adapted to transmit energy from the motor to the crushing unit (110) of the desiccation system (100), wherein the energy transmission is mechanical, electrical or hydraulic.

## Revendications

1. Système d'injection (100) pour la destruction mécanique de plants (10, 12, 14), en particuliers de plants de pommes de terre, sur des surfaces cultivées dans le cadre de travaux agricoles, qui est configuré pour être déplacé par un véhicule utilitaire agricole (200) sur une surface cultivée, sachant que les plants (10, 12, 14) se trouvent dans la terre de la surface cultivée et le système d'injection (100) est configuré de telle manière que les plants (10, 12, 14) même après utilisation du système d'injection (100) restent enracinés dans la terre, sachant que le système d'injection (100) comprend :
au moins une unité de broyage (110), et
une section de liaison (120), qui est configurée pour relier le système d'injection (100) mécaniquement au véhicule utilitaire agricole (200), sachant que
au moins une unité de broyage (110) comprend deux corps de broyage rotatifs (112) et qu'une droite imaginée (D) à travers les axes de rotation (114) des deux corps de broyage rotatifs (112) se situe pour l'essentiel perpendiculairement à la direction de marche préférée (A) du véhicule utilitaire agricole (200),
sachant que les deux corps de broyage rotatifs (112) d'au moins une unité de broyage (110) sont disposés de telle manière qu'entre les deux corps de broyage (112) est défini un espace de broyage (C), sachant que la rotation des deux corps de broyage rotatifs (112) d'au moins une unité de broyage (110) est couplée de telle façon que des fanes des plants vivants (10, 12, 14) sont entraînés et broyés par la rotation des deux corps de broyage rotatifs (112) dans l'espace de broyage (C).

2. Système d'injection (100) selon la revendication 1, sachant que les axes de rotation (114) sont perpendiculaires à la surface cultivée pendant le fonctionnement dans une plage de ± 15°, de préférence de ± 10°, et/ou les axes de rotation (114) sont parallèles l'un par rapport à l'autre dans une plage de ± 30°, de préférence de ± 15°, en particulier de préférence de ± 5°.

3. Système d'injection (100) selon la revendication 1 ou 2, sachant que les surfaces des corps de broyage rotatifs (112) tournées l'une vers l'autre se déplacent dans la zone de l'espace de broyage (C) à la même vitesse périphérique et dans la même direction de telle manière que les fanes sont entraînées et broyées.

4. Système d'injection (100) selon l'une quelconque des revendications précédentes, comprenant en plus une commande, qui commande la rotation des corps de broyage rotatifs (112) de telle manière que la vitesse des surfaces tournées l'une vers l'autre des corps de broyage (112) est au moins la même dans la zone de l'espace de broyage que la vitesse de marche du véhicule utilitaire agricole (200) ou plus rapide que celle-ci.

5. Système d'injection (100) selon l'une quelconque des revendications précédentes, sachant que les corps de broyage rotatifs (112) comportent pour l'essentiel une forme de cylindre ou une forme tronconique se réduisant légèrement vers le bas et sachant que les cylindres comportent de préférence pour l'essentiel le même diamètre.

6. Système d'injection (100) selon l'une quelconque des revendications précédentes, sachant que les deux corps de broyage (112) de l'unité de broyage (110) sont logés de façon élastique avec une force de précontrainte, qui correspond à un ressort agissant en direction de l'axe de rotation de l'autre corps de broyage respectif (112) avec une constante élastique se situant entre 1000 N/m et 100 000 N/m, de préférence entre 5 000 N/m et 10 000 N/m, ou
sachant que les deux corps de broyage (112) de l'unité de broyage (110) sont logés l'un par rapport à l'autre de telle manière que ceux-ci ont une distance constante ou se touchent mutuellement jusqu'à l'application d'une force de séparation, sachant que la force de séparation se situe entre 1 - 100 kg.

7. Système d'injection (100) selon l'une quelconque des revendications précédentes, comprenant en plus deux bras de guidage (140), qui s'étendent d'une position du système d'injection (100) à une extrémité inférieure de l'unité de broyage (110) pour acheminer les fanes (10, 12, 14) vers une zone d'entraînement de l'espace de broyage (C) de l'unité de broyage (110).

8. Système d'injection (100) selon la revendication 7, sachant que les bras de guidage (140) sont inclinés vers le bas d'un angle de 10° à 40°, de préférence de 15° à 30° à l'opposé de l'unité de broyage (110) en se référant à un plan perpendiculaire aux axes de rotation (114) des corps de broyage (112) depuis l'extrémité inférieure de l'unité de broyage (110) et les deux bras de guidage (140) constituent un angle de 30° à 60°, de préférence de 40° à 50° dans le plan perpendiculaire aux axes de rotation (114) des corps de broyage (112).

9. Système d'injection (100) selon la revendication 7 ou 8, sachant que les bras de guidage (140) et deux lignes, qui relient respectivement les extrémités supérieures et inférieures des bras de guidage (140) entre elles, perpendiculairement projetés sur un plan dans lequel se situent les deux axes de rotation (114) des corps de broyage (112), forment une forme trapézoïdale, dont les côtés parallèles comportent un rapport de 1:2 à 1:3 et dont les branches constituent respectivement un angle se situant entre 25° et 60 °, de préférence entre 35° et 45°, par rapport aux côtés plus longs des côtés parallèles.

10. Système d'injection (100) selon l'une quelconque des revendications 7-9, sachant que pour les bras de guidage (140) comportent respectivement une section en forme de V et les interfaces inférieures des formes en V des deux bras de guidage (140) sont tournées l'une vers l'autre.

11. Système d'injection (100) selon l'une quelconque des revendications précédentes, sachant que la section de liaison (120) est configurée pour réaliser un accouplement amovible au véhicule utilitaire agricole (200) et permet une transmission d'énergie du véhicule utilitaire agricole (200) à un moteur du système d'injection (100), qui est configuré pour entraîner en rotation les corps de broyage rotatifs (112).

12. Système d'injection (100) selon l'une quelconque des revendications précédentes, comprenant en plus
une roue, qui est configurée pour garantir une distance constante entre la surface cultivée et le système d'injection (100), et
sachant que la vitesse de rotation des corps de broyage (112) d'au moins une unité de broyage (110) est commandée en fonction de la vitesse de rotation de la roue de telle manière que la vitesse périphérique de la roue et la vitesse des surfaces tournées l'une vers l'autre des corps de broyage (112) sont identiques dans la zone de l'espace de broyage (C) ou la vitesse des surfaces tournées l'une vers l'autre des corps de broyage (112) est plus élevée dans la zone de l'espace de broyage (C).

13. Véhicule utilitaire agricole (200) comprenant :
un système d'injection (100) selon l'une quelconque des revendications précédentes,
un moteur, qui entraîne le véhicule utilitaire (200), sachant que la section de liaison (120) du système d'injection (100) est conçu pour la transmission d'énergie par le moteur et l'unité de broyage (110) du système d'injection (100), sachant que la transmission d'énergie a lieu de façon mécanique, électrique ou hydraulique.
